# EUROPEAN PATENT APPLICATION

(11) **EP 3 109 087 A1**
(43) Date of publication of application: **28.12.2016**
(21) Application number: 15173550.3
(22) Date of filing: 24.06.2015
(51) Int. Cl.: B60L 5/12, B60L 11/18

(54) **ELECTRIC POWER SUPPLY STATION FOR AN ELECTRIC URBAN BUS**

(71) Applicant: Iveco France S.A., 69200 Vénissieux (FR)
(72) Inventor: Gendre, Guy, 69003 Lyon (FR); Leleu, Gauthier, 38090 Villefontaine (FR)
(74) Representative: Bongiovanni, Simone

(57) **Abstract**

Electric power supply station (1) for an electric urban bus designed to be placed in correspondence of a bus stop to provide electrical power to the bus (2) when the bus (2) stands at the bus station, the electric power supply station comprising a base portion (4) that is suitable to be stably connected to the ground (5) and a central portion (7) that extends from the base portion (4) along a vertical axis H and is formed by a number of tubular elements (10) joined together. The tubular elements (10) diverge from a top portion of the central portion (7) in a first semi- arch structure (12) and in a second semi-arch structure (13) that are realized integrally with the tubular elements (10) forming the central portion (7) and that hold respective couples of first rectilinear metallic conductors (15a, 15b; 17a, 17b) extending parallel one with respect to the other and lying in a supply plane that is somewhat parallel with the plane of the road portion (6) where the bus (2) stands.

## Description

The present invention relates to an electric power supply station for an electric urban bus.

The use of electric bus, i.e. bus powered by electric motors only supplied completely with a number of accumulators carried by the bus, is increasing as these electrical vehicles have a low environmental impact, produce a reduced noise and vibrations and may be easily used in urban centers.

The main drawback of the above bus is the following: the accumulators of the bus have to be frequently charged. To that regard, the bus is provided with a pantograph that is designed to come in contact with power supply lines to provide a DC voltage for the recharge of the accumulators.

Some producers have proposed solutions of stations where the pantograph of the bus may get in contact with powering conductors; however, these solutions are extremely bulky , complex and occupy a lot of space. For these reasons the above proposals have been scarcely adopted by the users of bus fleets.

It is present a need of the market to provide an electric power supply station that is simple and occupies a reduced space so that it can also be used at a bus stop.

The above need is satisfied by the present invention that relates to a powering station for an electric urban bus as defined in claim 1.

The invention will be described with the need of the accompany drawings wherein:
- Figure 1 shows an example of the present invention according to a first embodiment.
- Figure 2 shows a large-scale detail of Figure 1.
- Figure 3 shows an example of the present invention according to a second embodiment.
- Figure 4 shows an example of the present invention according to a third embodiment.
- Figure 5 shows an example of the present invention according to a fourth embodiment; and
- Figure 6 shows an example of the present invention according to a fifth embodiment.
- Figure 7 shows an example of the present invention according to a sixt embodiment.

Number 1 indicates an electric power supply station for an electric urban bus. The electric power supply station 1 is designed to be placed in correspondence of a bus stop and is designed to provide electrical power to the bus 2 when the bus 2 stands at the bus station. The electric urban bus 2 (of known type) is in fact provided with a number of accumulators (not shown) that must be periodically charged drawing a voltage (for instance 600 Volts) from a DC power source.

The powering station 1 comprises a base portion 4 that is suitable to be stably connected to the ground that, in normal use, is formed by an elongated dock 5 that extends along a straight portion of a road portion 6 that forms a parking place for the bus 2. The dock 5 defines a walking surface that lies in a plane that is higher with respect to the plane of the parking place. In the example the base portion 4 has a flat circular shape , but other shapes are possible.

The powering station 1 also comprises a central portion 7 that extends from the base portion 4 along a vertical axis H and is formed by a number of tubular elements 10 joined together. The tubular elements 10, according to the invention, diverge from a top portion of the central portion 7 in a first semi- arch structure 12 and in a second semi-arch structure 13 that are realized integrally with the tubular elements 10 forming the central portion 7. The first semi-arch structure 12 has one free end 12e that is designed to hold a couple of rectilinear metallic conductors 15a, 15b extending parallel one with respect to the other and lying in a plane that is somewhat parallel with the plane of the road portion 6. The second semi-arch structure 13 has one free end 13e that is designed to hold a couple of rectilinear metallic conductors 17a, 17b extending parallel one with respect to the other and lying in a plane that is somewhat parallel with the plane of the road portion 6.

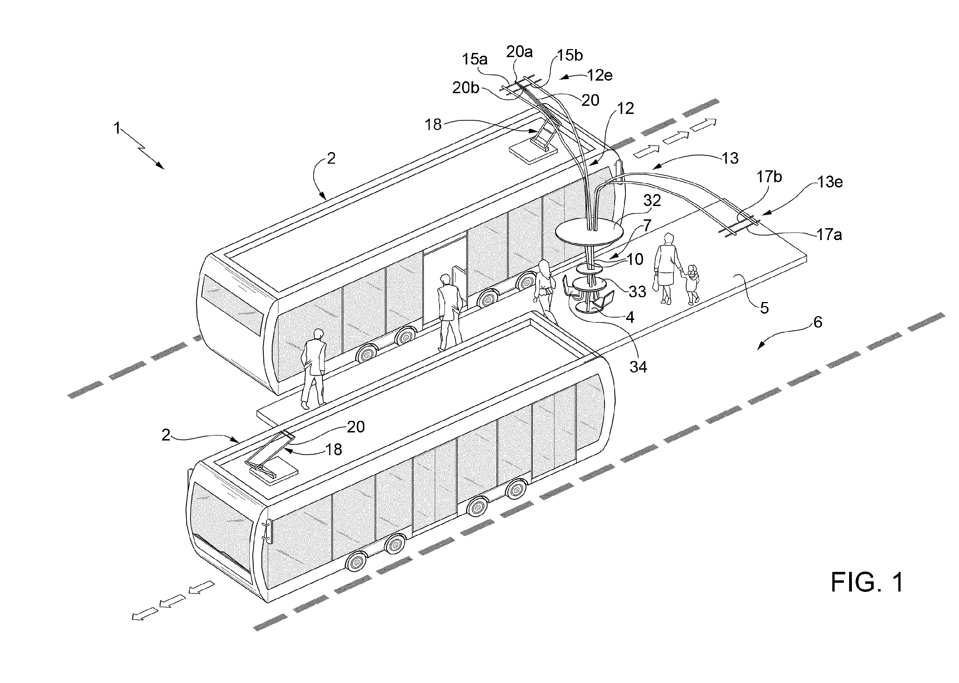

The first and second arch portions 12 and 13 extend towards opposite direction so that the first free end 12e is placed above of a portion of the road portion 6 (figure 1) extending along a first side of the dock 5 and the second free end 13e is placed above of a portion of the road portion 6 extending along a second side of the dock 5. In this way, two buses may mate with a single electric power supply station.

The electric bus 2 is equipped on its roof with a pantograph 18 that is provided with a straight electrically conducting element 20 provided with a first electrically conducting portion 20a designed to rest against the first conductor 15a or 17a and a second electrically conducting portion 20b electrically isolated from electrically conducting portion 20a and designed to rest against the second conductor 15b or 17b.

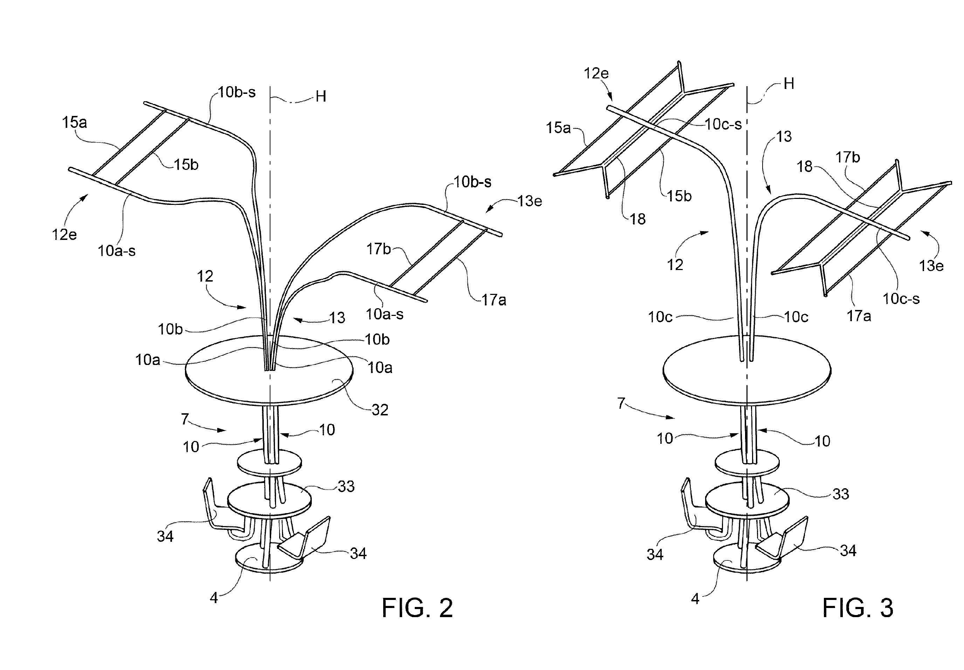

According to a first embodiment of the invention (Figures 1 and 2) the first semi arch structure 12 and/or the second semi arch structure 13 comprise a first tubular element 10a having one first end connected with the base portion 4 and a second tubular element 10b having a fist end connected with the base portion 4; the first and the second tubular element 10a, 10b touch one with the other in the central portion 7 and diverging one with respect to the other in the upper part of the central portion 7 to form a Y shaped structure. The first and second tubular element 10a, 10b having straight free ends 10a-s, 10b-s parallel one with respect to the other and lying in the same plane. The metallic conductors 15a, 15b are carried by the straight free ends 10a-s, 10b-s by means of suitable insulators (of known kind) and extend perpendicular with respect the straight free ends 10a-s, 10b-s. As above outlined, the semi-arch structure described comprises a couple of tubular elements 10.

According to a second embodiment (Figure 3) of the invention the first semi arch structure 12 and / or the second semi arch structure 13 comprise a single tubular element 10c having one first end connected with the base portion 4 and comprising a first C- shaped portion which is integral with a straight free end 10c-s that lies in such a plane. The metallic conductors 15a, 15b are carried by the straight free end 10c-s by means of suitable metallic structure 18 (of known kind) provided with insulators and extend perpendicular with respect the straight free end 10c-s. As above outlined the semi-arch structure described comprise a single of tubular element 10.

In both cases, the electric cables (not represented) that are designed to provide electric power to the metallic conductors extend inside the tubular element so that they are protected from the outside. The straight portions are provided with apertures (not shown) to permit the passage of the cables for their connection with the metallic conductors.

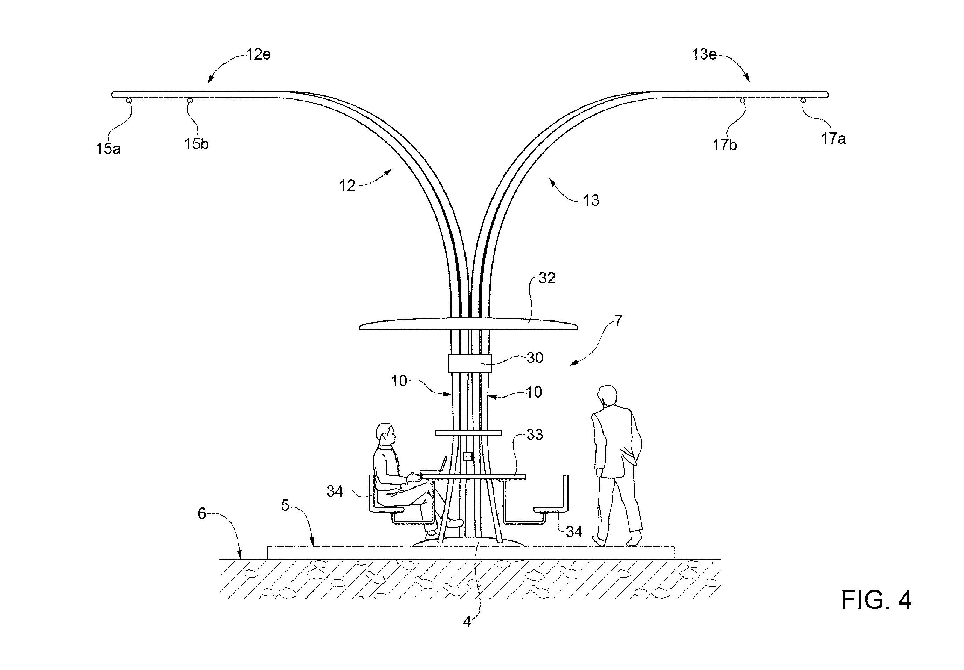

According to a third embodiment of the invention (Figure 4) the central portion 7 is provided with a central joint 30 (of known type) interposed between a lower portion of the central portion 7 (including the base portion 4) and an upper portion of the central portion 7 from which the semi arch structures branch. The central joint 30 is designed to permit the angular displacement of the upper portion with respect to the lower portion around axis H so that the straight free end may be placed over a place other than the parking place for instance over the dock 5. This permits to free the road 6 so that a vehicle higher than straight portion may pass through the road. According to a non represented fourth embodiment the central joint 30 may also permit a linear displacement of the upper portion with respect to the lower portion to regulate the distance between the straight portion(s) and the road.

The central portion 7 is also equipped with a roof portion 32 provided with holes for the passage of the tubes 10 and designed to give protection from weather elements (rain, snow, ice) to people standing at the bus station. In the example the roof portion 32 is formed by a circular wall perpendicular to axis H.

The central portion 7 is also equipped with a table portion 33 provided with holes for the passage of the tubes 10 and designed to provide supports for objects carried or used (e.g. computers, laptops, cellular phones etc) by people standing at the bus station. In the example the table portion 33 is formed by a circular or annular wall perpendicular to axis H. The table portion 33 may be equipped with a number of seats 34 connected with the table portion 33 so that they may rotate with respect to the table portion 33 around respective rotating axes parallel to axis H according pivoting systems of known type.

The central portion 7 may also be provided with a number of sockets (non shown), for instance sockets placed on table portion 33, for the supply of an AC voltage (50 Hz,220 V) to the users of the bus station. The sockets may be powered by an inverter system (not shown) transforming the DC voltage of the cable in a suitable mains voltage.

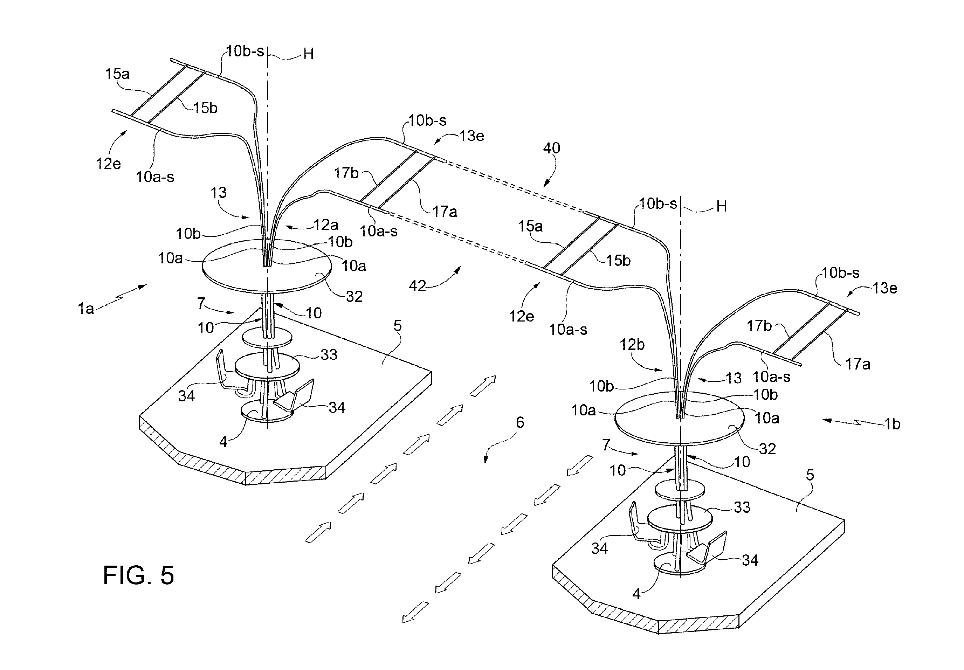

In the fourth embodiment of figure 5, is shown an electric power plant for supplying electric power to a plurality of bus comprising a first electric power supply station 1a as above described with reference to figure 1 and a second electric power supply station 1b as defined with reference to figure 1.

The first semi arch element 12a of the first electric power supply station 1a faces the first semi arch element 12b of the second power supply station 1b. According to the embodiment described in figure 5, it is provided an interconnecting element 40 (shown schematically with dotted line) connecting mechanically and electrically the free ends of the first semi arch element 12a of the first electric power supply station 1a with the free ends of the first semi arch element 12b of the second electric power supply station 1a so that the first and the second semi-arch elements realize a single arch element 42 bridging between the central portion of the first electric power supply station 1a and the central portion of the second electric power supply station 1b. The interconnecting element 40 may preferably comprise tubular elements connected with respective tubular elements 10.

According to this embodiment, it is realized a power supply station having an arch 42 that extends over a road where buses may move according to a first and a second direction (shown in figure 5 with arrows).

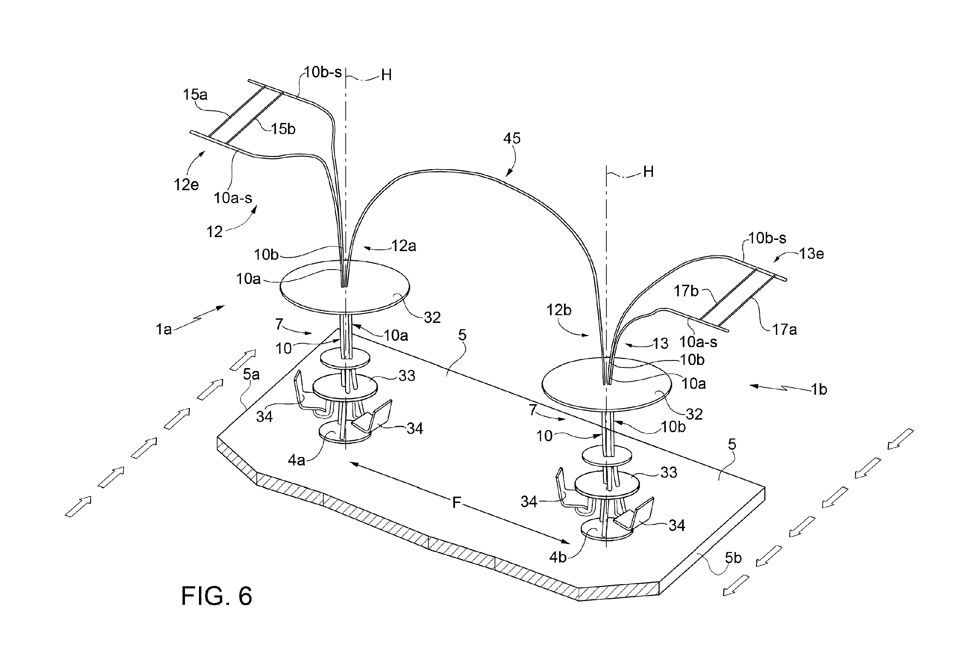

In the embodiment shown in figure 6, the electric power station has a "double" central portion 7 comprising a first group of tubular elements 10a joined together and extending from a first base 4a (connected to the deck 5) and second group of tubular elements 10b joined together and extending from a second base 4b (connected also to the deck 5).

The first group of tubular elements 10a is laterally spaced with respect of the second group of tubular elements 10b of a given distance F measured in a direction that is perpendicular to the main sides 5a, 5b of the deck 5.

According to this embodiment, a tubular arch element 45 extends integrally between top portions of the first group 10a and the second group 10b over the deck 5.

The first semi arch structure 12 extends from the first group of tubular elements 10a on a side opposed to the side where the tubular arch element 45 extends and the second semi arch structure extends from the second group of tubular elements 10b on a side opposed to the side where the tubular arch element 45 extends.

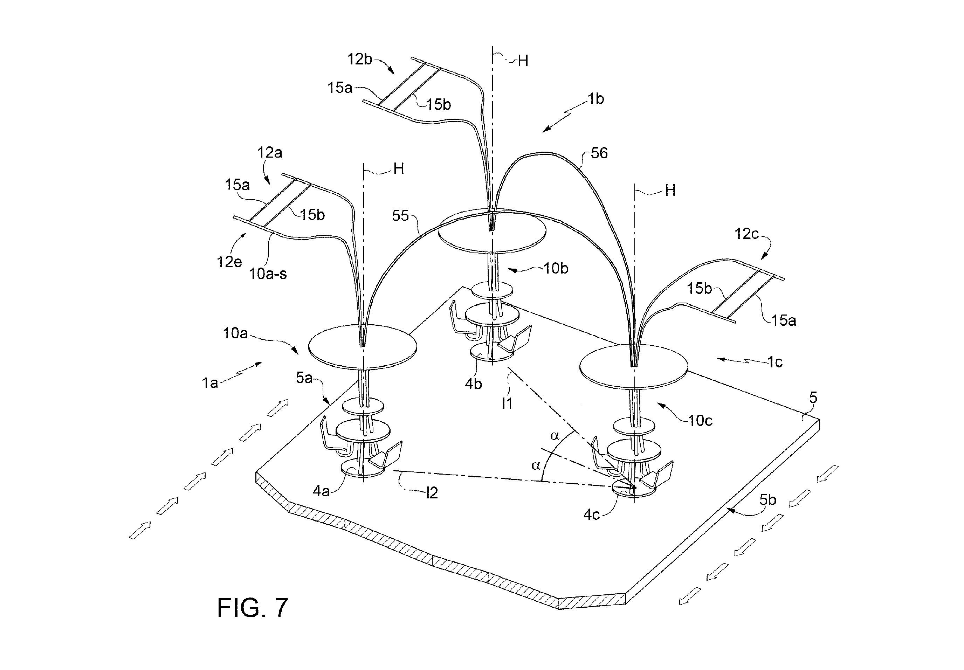

According to this embodiment, it is realized a power supply station having an arch 45 that extends over the deck 5 where people move. In the embodiment shown in figure 6 the first group of tubular elements 10a and the second group of tubular elements 10b are facing one with the other, i.e are not spaced along the main sides 5a, 5b of the deck 5. However, the first group of tubular elements 10a and the second group of tubular elements 10b may also be spaced along the main sides of the deck 5 so that the first group of tubular elements 10a and the second group of tubular elements 10b are not facing one with the other. In the embodiment shown in figure 7, the electric power station has a "triple" central portion 7 comprising a first group of tubular elements 10a joined together and extending from a first base 4a (connected to the deck 5), a second group of tubular elements 10b joined together and extending from a second base 4b (connected also to the deck 5) and a third group of tubular elements 10c joined together and extending from a third base 4c (connected to the deck 5).

The first and the second base 4a, 4b are designed to be placed close to a first side 5a of the deck 5 and spaced one with respect to the other along the first side 5a whilst the third base 4c is designed to be placed close to a second side 5b of the deck 5. A line l1, l2 connecting bases 4b, 4a, with base 4c forms an angle alfa with a line perpendicular to sides 5a, 5b.

According to this embodiment, a first tubular arch element 55 extends integrally between top portions of the first group 10a and the third group 10c over the deck 5 and a second tubular arch element 56 extends integrally between top portions of the second group 10b and the third group 10c over the deck 5.

Each group of tubular elements 10a, 10b and 10c is provided with at least one semi arch structure 12a, 12b, 12c provided with respective couple of metallic conductors 15a, 15b. According to this embodiment, it is realized a power supply station having two arches 55 and 56 that extends over the deck where people move. In the embodiment of figures 5, 6 and 7 central joint 30 are not provided.

## Claims

1. Electric power supply station (1) for an electric urban bus designed to be placed in correspondence of a bus stop to provide electrical power to the bus (2) when the bus (2) stands at the bus station, the electric power supply station being **characterized by** comprising:
- a base portion (4) that is suitable to be stably connected to the ground (5) that, in use, is formed by a dock (5) that extends along a portion of a road portion (6) that forms a parking place for the bus (2);
- a central portion (7) that extends from the base portion (4) along a vertical axis H and is formed by a number of tubular elements (10) joined together;
the tubular elements (10) diverge from a top portion of the central portion (7) in a first semi- arch structure (12) and in a second semi-arch structure (13) that are realized integrally with the tubular elements forming the central portion (7); the first semi-arch structure (12) has one free end (12e) that is designed to hold a couple or rectilinear metallic conductors (15a, 15b) extending parallel one with respect to the other and lying in a supply plane that is somewhat parallel with the plane of the road portion (6);
the second semi-arch structure (13) has one free end (13e) that is designed to hold a couple or rectilinear metallic conductors (17a, 17b) extending parallel one with respect to the other and lying in the supply plane ; the first and second arch portion (12 and 13 )extend towards opposite direction so that, in use, the first free end (12e) is placed above of a portion of the road portion (6) extending along a first side of the dock (5) and the second free end (13e) is placed above of a portion of the road portion (6) extending along a second side of the dock (5).

2. - The electric power supply station claimed in claim 1, wherein at least one semi arch structure (12, 13) comprise:
a first tubular element (10a) having one first end connected with the base portion (4), and a second tubular element (10b) having a fist end connected with the base portion; the first and the second tubular element (10a, 10b) touching one with the other in the central portion (7) and diverging one with respect to the other in the upper part of the central portion (17) to form a Y shaped structure; the first and second tubular element (10a, 10b) having respective straight free ends (10a-s, 10b-s) parallel one with respect to the other and carrying said metallic conductors (15a, 15b) that extend perpendicular with respect the straight free ends (10a-s, 10b-s).

3. - The electric power supply station claimed in claim 1, wherein at least one semi arch structure (12, 13) comprise:
a single tubular element (10c) having one first end connected with the base portion (4) and comprising a first C shaped portion that is integral with a straight free end (10c-s) that carries said metallic conductors (15a, 15b; 17a, 17b).

4. - The electric power supply station claimed in claim 1, wherein said tubular elements (10) are designed to house electric cables used to provide electric power to the metallic conductors (15a, 15b; 17a, 17b).

5. - The electric power supply station claimed in claim 1, wherein the central portion (7) is provided with a central joint (30) interposed between a lower portion of the central portion (7) including base portion (4) and an upper portion of the central portion (7) from which the semi arches structures (12, 13) branch; the central joint (30) is designed to permit the angular displacement of the upper portion with respect to the lower portion around axis H.

6. - The electric power supply station claimed in any of the proceedings claims, wherein the central portion (7) is equipped with a roof portion (32) provided with holes for the passage of the tubes (10) and designed to give protection from weather elements to people standing at the bus station.

7. - The electric power supply station claimed in any of the proceedings claims, wherein the central portion (7) is equipped with a table portion (33) provided with holes for the passage of the tubes (10) and designed to provide supports for objects carried or used by people standing at the bus station.

8. - The electric power supply station claimed in claim 7, wherein the table portion (33) is equipped with a number of seats (34) connected with the table so that they may rotate with respect to the table portion (33) around respective axes parallel to axis H.

9. - The electric power supply station claimed in any of the proceedings claims, wherein the central portion (7) is also provided with a number of sockets for the supply of an AC voltage to the users of the bus station.

10. - The electric power station as claimed in claim 1, wherein the central portion (7) comprises a first group of tubular elements (10a) joined together and extending from a first base (4a) and second group of tubular elements (10b) joined together and extending from a second base (4b);
the first group of tubular elements (10a) being laterally spaced with respect of the second group of tubular elements (10b);
a tubular arch element (45) extending integrally between top portions of the first group and the second group over the deck;
the first semi arch structure extending from the first group of tubular elements (10a) on a side opposed to the side where the tubular arch element (45) extends;
the second semi arch structure extending from the second group of tubular elements (10b) on a side opposed to the side where the tubular arch element (45) extends;

11. - The electric power station as claimed in claim 1, wherein the central portion (7) comprises a first group of tubular elements (10a) joined together and extending from a first base (4a), a second group of tubular elements (10b) joined together and extending from a second base (4b) and a third group of tubular elements (10c) joined together and extending from a third base (4c).
the first and the second base (4a, 4b) are designed to be placed close to a first side (5a) of the deck (5) and spaced one with respect to the other along the first side (5a) of the deck (5) whilst the third base (4c) is designed to be placed close to a second side (5b) of the deck (5);
a first tubular arch element (55) extends integrally between top portions of the first group (10a) and the third group (10c) over the deck (5) and a second tubular arch element (56) extends integrally between top portions of the second group (10b) and the third group (10c) over the deck (5);
each group of tubular elements (10a, 10b and 10c) is provided with at least one semi arch structure (12a, 12b, 12c) equipped with a a respective couple of metallic conductors (15a, 15b).

12. - The electric power plant for supplying electric power to a plurality of bus comprising:
a first electric power supply station (1a) as defined in claim 1;
a second electric power supply station (1b) as defined in claim 1;
the first semi arch element (12a) of the first electric power supply station (1a) facing the first semi arch element (12b) of the second power supply station (1b) ;
interconnecting means (40) are provided to connect mechanically and electrically the free end of the first semi arch element (12a) of the first electric power supply station (1a) with the free end of the first semi arch element (12b) of the second electric power supply station (1a) so that the first and the second semi-arch element realize an arch element (42) bridging between the central portion of the first electric power supply station (1a) and the central portion of the second electric power supply station (1b).
